# EUROPÄISCHE PATENTANMELDUNG

(11) **EP 0 670 489 A2**
(43) Veröffentlichungstag der Anmeldung: **06.09.1995**
(21) Anmeldenummer: 95810116.4
(22) Anmeldetag: 22.02.1995
(51) Int. Cl.: G01N 30/38, G01N 30/60, G01N 30/88

(54) **Vorrichtung und Verfahren zur Trennung fluider Substanzen**

(30) Priorität: 03.03.1994 CH 633/94
(71) Anmelder: CIBA-GEIGY AG, 4002 Basel (CH)
(72) Erfinder: Manz, Andreas, Dr., CH-4126 Bettingen (CH)

(57) **Zusammenfassung**

Es ist eine Vorrichtung zur Trennung fluider Substanzen, insbesondere eine kapillarchromatografische Trennvorrichtung geschaffen, welches eine Trennstrecke (1) umfasst, in der eine stationäre Phase (S) angeordnet ist und die von einer mobilen Phase enthaltend eine in ihre Komponenten (A,B,C) aufzutrennende Probe durchstömt wird. Die Vorrichtung umfasst auch Mittel (5) für den Transport der mobilen Phase sowie eine Detektionseinrichtung zur Detektion der aufgetrennten Komponenten (A,B,C). Die Trennstrecke (1) ist als ringförmiger Kanal ausgebildet, in den Zufluss- und Abflusskanäle (2,3) für die mobile Phase und die aufzutrennende fluide Substanz münden. In einer ganz besonders bevorzugten Ausführungsvariante der Erfindung sind die Mittel (5) für den Transport der mobilen Phase innerhalb des ringförmigen Kanals (1) angeordnet. Bei dem beschriebenen Verfahren zur Trennung fluider Substanzen wird die mobile Phase zusammen mit der aufzutrennende Probe in einer als ringföörmiger Kanal ausgebildeten Trennstrecke (1) zyklisch umgepumpt. Vorzugsweise erfolgt das Umpumpen mit Hilfe von Transportmitteln (5), die innerhalb des ringförmigen Kanals (1) angeordnet sind.

## Beschreibung

Die Erfindung betrifft eine Vorrichtung und ein Verfahren zur Trennung von fluiden Substanzen, insbesondere eine Vorrichtung und ein Verfahren zur Kapillar-Flüssigchromatographie, gemäss Oberbegriff des Patentanspruchs 1 und gemäss Oberbegriff des Patentanspruchs 13.

Die Flüssigchromatographie und insbesondere die sogenannte High Performance Liquid Chromatography (HPLC) ist eine etablierte Technik zur präparativen oder analytischen Trennung fluider Substanzen in ihre einzelnen Komponenten. Die chromatographische Trennung beruht darauf, dass eine mobile (bewegliche) Phase über eine stationäre (unbewegliche) Phase wandert, und dass dabei die aufzutrennenden Komponenten mit unterschiedlicher Geschwindigkeit transportiert werden. An der stationären Phase, die üblicherweise in einer Chromatographiesäule angeordnet ist, tritt eine unterschiedliche Verteilung der zu trennenden Komponenten in der mobilen Phase auf. Diese sich ständig wiederholende unterschiedliche Verteilung bewirkt einen kontinuierlichen Trennungsprozess.

Bei den modernen flüssig-chromatographischen Trennverfahren ist die stationäre Phase meist innerhalb einer Glassäule oder einer Stahlsäule angeordnet, die von der mobilen Phase durchlaufen wird. Zur Erhöhung der Trennneffizienz wird in der Trennsäule vielfach ein Druckgradient von 200-300 bar eingestellt (HPLC). Die Flüssigchromatographie und insbesondere die HPLC sind sehr flexible Trennmethoden, die flexibel einsetzbar und mittlerweile etabliert und allgemein akzeptiert sind. Nachteilig an der Flüssigchromatographie und insbesondere an der HPLC sind die trotz des verhältnismässig grossen technischen Aufwands (z.B. spezielle Hochdruckventile bei HPLC) bescheidenen Trennleistungen, die langen Analysenzeiten von 20-40 Minuten bei einer Zykluszeit von 30-60 Minuten. Die typischen Fliessgeschwindigkeiten der mobilen Phase liegen bei etwa 2-5 ml/min. Ausserdem benötigen diese konventionellen chromatographischen Trenntechniken eine grosse Menge von Reagenzien, was vielfach unerwünscht ist, und deren Einsatzmöglichkeit für die Trennung und Analyse kleiner Probenvolumina deutlich einschränkt.

In der bekannten Kapillar-Flüssigchromatographie werden dünne Kapillaren mit Innendurchmessern von nur 1-5 µm eingesetzt. Zwar ist diese Trenntechnik theoretisch sehr leistungsfähig und sollte in relativ kurzer Zeit eine gute Trennleistung liefern, jedoch erfordert ihre Anwendung grosses fachmännisches Wissen und stellt hohe Anforderungen an die apparative Ausstattung und an das Können des Anwenders. Für den Betrieb derartiger Trennsysteme sind Systemdrücke von 200-300 bar erforderlich. Es sind jedoch keine Pumpen bekannt, mit denen es möglich wäre, bei derartigen Drücken Picoliter bis Nanoliter pro Minute zu fördern oder bei den geringen Fördermengen die hohen Drücke im System aufrechtzuerhalten. Ein weiteres Problem stellen die Injektion und die Detektion kleinster Volumina von beispielsweise nur 1 pl dar.

Eine alternative Trenntechnik für die Trennung fluider Substanzen in ihre Komponenten stellt die Elektrophorese dar. Bei dieser Trenntechnik wandern molekulardisperse oder kolloiddisperse Teilchen in einem elektrischen Feld mit unterschiedlicher Geschwindigkeit und werden auf diese Weise aufgetrennt. In der EP-A-0,544,969 (entspricht U.S. Patent Application Serial No. 07/983,178) ist eine Vorrichtung beschrieben, bei der eine zu trennende Substanz zyklisch entlang einer geschlossenen Bahn transportiert wird und dabei in einem segmentweise anlegbaren elektrischen Feld elektrophoretisch aufgetrennt wird. Mit dieser vorzugsweise miniaturisierten Vorrichtung sind sehr hohe Tennleistungen erreichbar, die mit zunehmender Trennzeit grösser wird. Die Synchronisation der Spannungsumschaltung von Segment zu Segment muss sehr präzise sein, damit die zu analysierende Komponente im detektierbaren "Fenster" bleibt und nicht wie zu schnell oder zu langsam umlaufende Komponenten verloren geht.

Es ist daher die Aufgabe der vorliegenden Erfindung eine Vorrichtung und ein Verfahren zur Trennung fluider Substanzen schaffen, welche den Nachteilen und Schwierigkeiten des diesbezüglichen Standes der Technik abhelfen. Dabei sollen die Vorteile der chromatografischen Trenntechnik genutzt werden und auf das Anlegen von elektrischen Trennfeldern, die gegebenenfalls noch synchronisiert werden müssen, verzichtet werden können. Insbesondere sollen ein kapillarchromatografisches Trennverfahren und eine zugehörige Vorrichtung geschaffen werden, welche sehr leistungsfähig sind und eine hohe Trennleistung erlauben und dabei aber eine schnelle Trennung und Analyse ermöglichen.

Das Verfahren und die Vorrichtung sollen auch für sehr kleine Probenvolumina geeignet sein; auf die für die Kapillarchromatographie erforderlichen sehr hohen Drücke von 200-300 bar soll verzichtet werden können. Die Vorrichtung soll es auch erlauben, das der chromatografischen Trenntechnik zugrunde liegenden Prinzip der Verwendung einer stationären Phase und einer mobilen Phase noch zu erweitern. Die Vorrichtung soll einfach miniaturisierbar sein und mit massenproduktionstechnischen Mitteln relativ kostengünstig herstellbar sein.

Die Lösung all dieser und noch weiterer inhärenter Aufgaben erfolgt durch eine Vorrichtung und durch ein Verfahren zur Trennung fluider Substanzen gemäss Kennzeichen der jeweiligen unabhängigen Patentansprüche 1 bzw. 13.

Insbesondere wird durch die Erfindung eine Vorrichtung zur Trennung fluider Substanzen, insbesondere eine kapillarchromatografische Trennvorrichtung geschaffen, welches eine Trennstrecke umfasst, in der eine stationäre Phase angeordnet ist und die von einer mobilen Phase enthaltend eine in ihre Komponenten aufzutrennende Probe durchstömt wird. Die Vorrichtung umfasst auch Mittel für den Transport der mobilen Phase sowie eine Detektionseinrichtung zur Detektion der aufgetrennten Komponenten. Die Trennstrecke ist als ringförmiger Kanal ausgebildet, in den Zufluss- und Abflusskanäle für die mobile Phase und die aufzutrennende fluide Substanz münden. Durch die ringförmige Ausbildung der Trennstrecke kann die Gesamtlänge der Vorrichtung deutlich reduziert werden. Die Auftrennung einer injizierten Probe erfolgt während ihres periodischen Umlaufs in dem ringförmigen Kanal, in dem die stationäre Phase angeordnet ist. Der Druckaufbau erfolgt in dem ringförmigen Kanal; auf externe Höchstdruckeinrichtungen kann verzichtet werden. Auf diese Weise kann beispielsweise eine Trennung bei 300 bar in einer 1 m langen Kapillare von 3 µm Durchmesser durch eine Vorrichtung mit mit einem ringförmigen Kanal gleichen Durchmessers und mit einem Umfang von 1 cm ersetzt werden, in dem die Probe 100 Umläufe vollzieht.

In einer ganz besonders bevorzugten Ausführungsvariante der Erfindung sind die Mittel für den Transport der mobilen Phase innerhalb des ringförmigen Kanals angeordnet. Auf diese Weise kann auf externe Pumpen für den zyklischen Umlauf der mobilen Phase mit der aufzutrennenden Probe in dem ringförmigen Kanal verzichtet werden. Die Auftrennung findet quasi innerhalb der Pumpe statt.

Bei einem Verfahren zur Trennung fluider Substanzen, insbesondere bei einem kapillarchromatographischen Trennverfahren, wird eine in ihre Komponenten aufzutrennende Probe in eine mobile Phase injiziert und zusammen mit dieser durch eine Trennstrecke transportiert, innerhalb der eine stationäre Phase angeordnet ist. Dabei wird die Probe durch Wechselwirkung mit der stationären Phase in ihre Komponenten aufgetrennt, welche in Folge mit einer Detektionseinrichtung detektiert werden können. Erfindungsgemäss wird die mobile Phase zusammen mit der aufzutrennende Probe in einer als ringförmiger Kanal ausgebildeten Trennstrecke zyklisch umgepumpt.

In einer besonders bevorzugten Verfahrensvariante werden die mobile Phase und die aufzutrennende Probe mit Mitteln zyklisch umgepumpt, die innerhalb des ringförmigen Kanals angeordnet sind. Auf diese Weise wird der ringförmige Kanal mit den darin angeordneten Transportmitteln selbst als druckaufbauende Fördereinrichtung genutzt.

Weitere besonders bevorzugte Ausführungsvarianten der Erfindung sind Gegenstand der jeweiligen abhängigen Patentansprüche. Im folgenden wird die Erfindung mit allen ihr als erfindungswesentlich zugehörigen Einzelheiten unter Bezugnahme auf die schematischen Darstellungen von beispielsweisen Ausführungsvarianten näher erläutert. Es zeigen:
- Fig. 1: eine Prinzipdarstellung der erfindungsgemässen Vorrichtung mit ringförmigem Trennkanal,
- Fig. 2: ein Segment des ringförmigen Trennkanals mit darin enthaltenem Rotor,
- Fig. 3-6: beispielsweise Rotorformen,
- Fig. 7: ein ringförmiger Trennkanal mit darin enthaltenem partikelförmig aufgelöstem Rotor und mit Antriebsmitteln für den Rotor,
- Fig. 8: eine Chipvariante der Erfindung in Aufsicht,
- Fig. 9: ein Axialschnitt der Chipvariante der Erfindung,
- Fig. 10a,b: das Geschwindigkeitsprofil in einer im ringförmigen Trennkanal zyklisch umlaufenden mobilen Phase
- Fig. 11-13: unterschiedliche Anordnungsvarianten einer stationären Phase innerhalb des ringförmigen Trennkanals,
- Fig. 14: ein Beispiel der von einer Detektoreinrichtung während der Umläufe registrierten Signale und
- Fig. 15: ein durch Transformation der detektierten Signale erhältliches Chromatogramm.

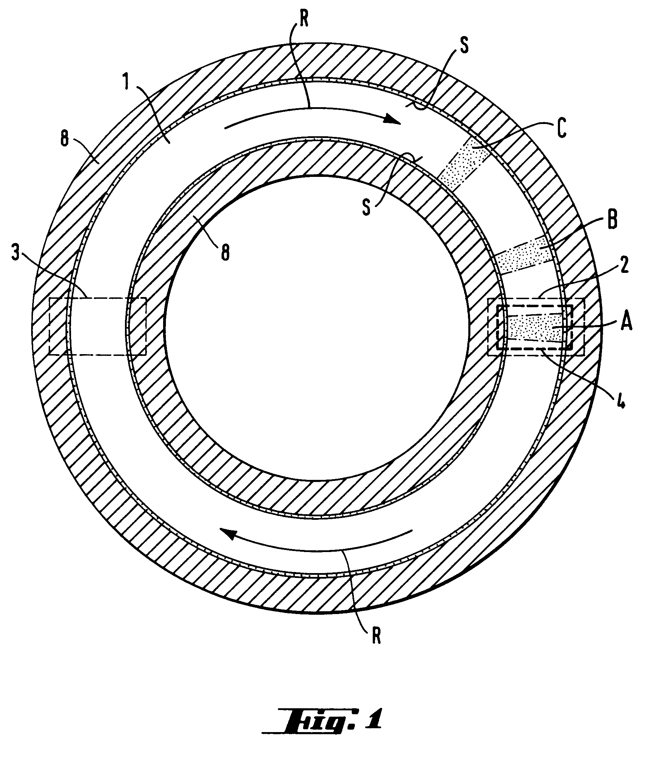

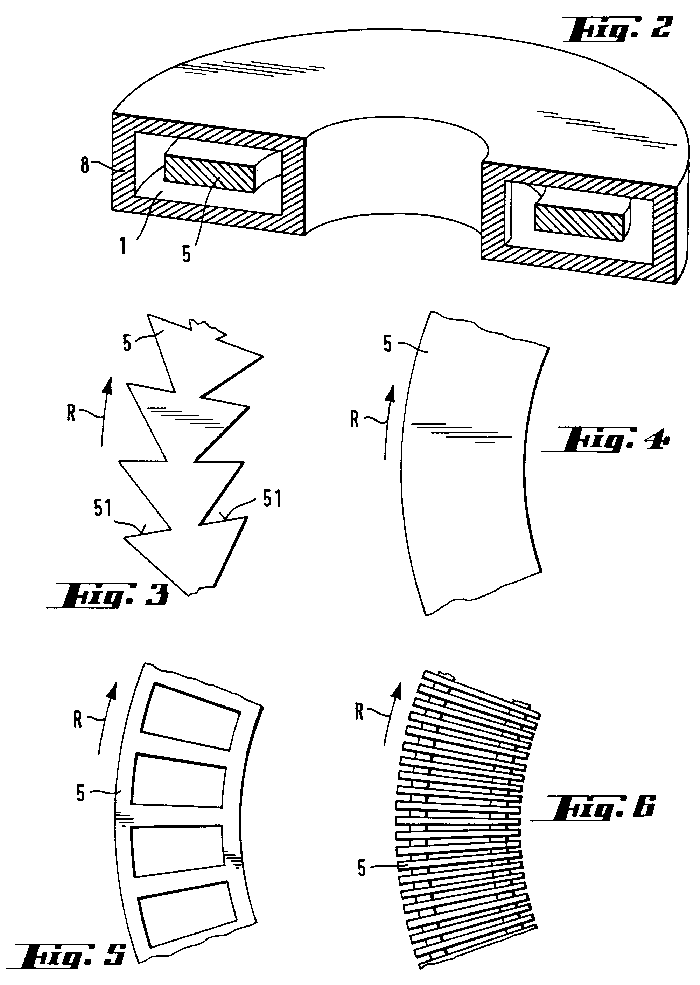

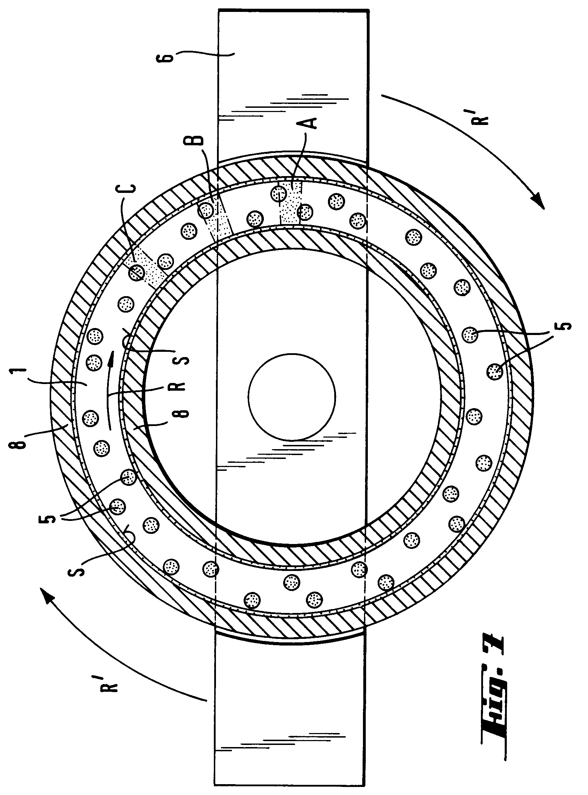

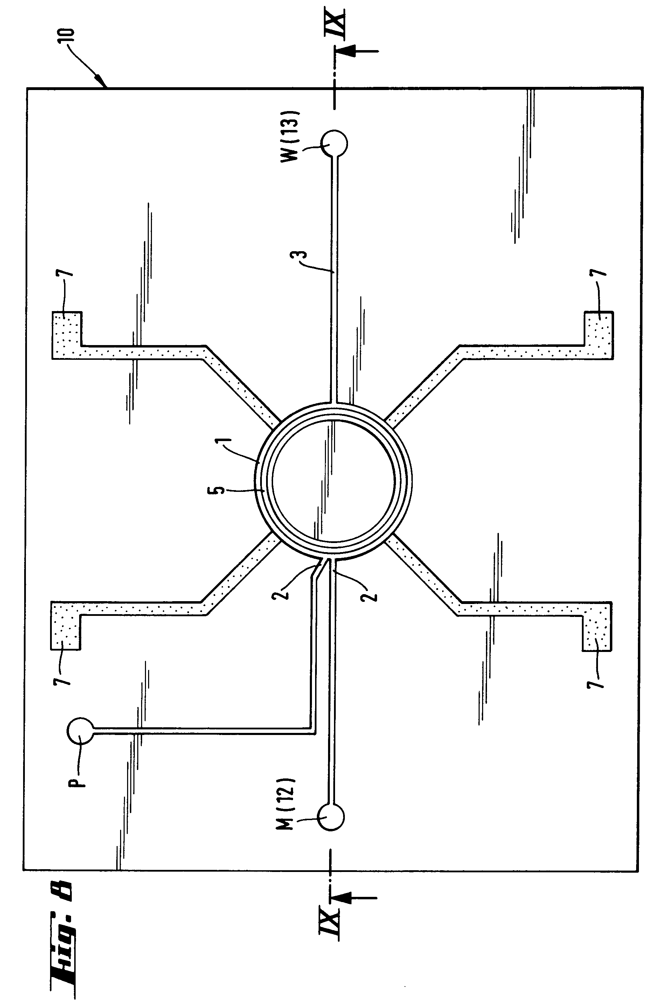

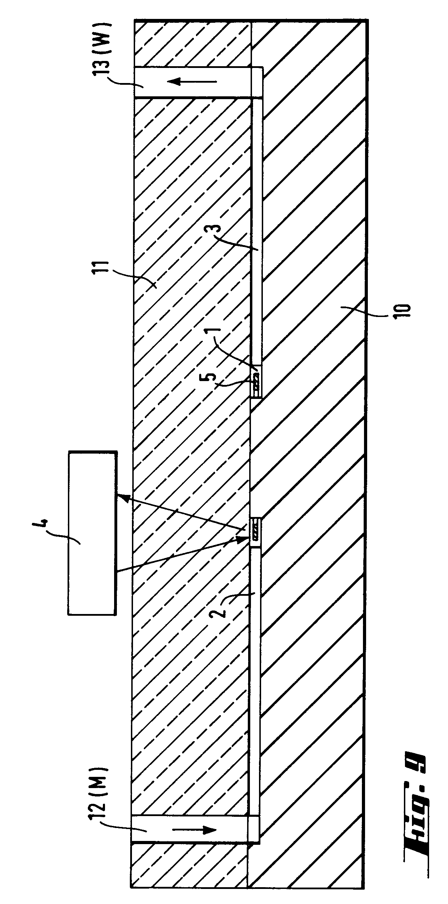

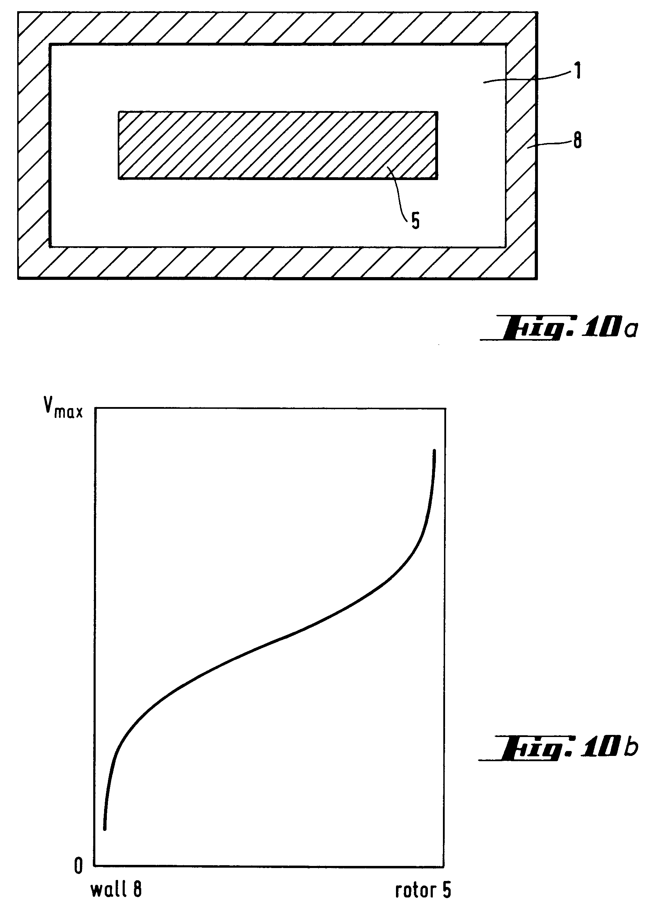

In Fig. 1 sind die erfindungsrelevanten Bestandteile der Erfindung dargestellt. Insbesondere ist eine kapillarenförmige Trennstrecke 1 ersichtlich, in der eine stationäre Phase S angeordnet ist. Die Trennstrecke 1 ist als ringförmiger Kanal ausgebildet, in den Zufluss- und Abflusskanäle 2 bzw. 3 für eine mobile Phase und eine aufzutrennende Probe münden. In Fig. 1 sind ein Zufluss- und ein Abflusskanal 2 bzw. 3 jeweils durch strichlierte Kästchen angedeutet. Die stationäre Phase S ist im dargestellten Ausführungsbeispiel der Vorrichtung an der Begrenzungswand 8 des ringförmigen Trennkanals 1 angeordnet. Eine Übersicht über die unterschiedlichen Materialien, die als stationäre Phasen eingesetzt werden können, und über deren prinzipielle Wechselwirkungsmechanismen mit verschiedenen Probentypen ist beispielsweise in "L.R. Snyder und J.J. Kirkland, Introduction to modern liquid chromatography, Second Edition, John Wiley & Sons, U.S.A. 1979" gegeben. Nicht näher dargestellte Transportmittel für die mobile Phase und die darin injizierte Probe sorgen dafür, dass diese im ringförmigen Trennkanal 1 zyklisch umlaufen, wie durch den Pfeil R angedeutet. Die Transportmittel können beispielsweise Pumpen sein, die in den Zufuhr- und den Abfuhrkanälen angeordnet sind. Während ihres zyklischen Umlaufs in dem ringförmigen Trennkanal 1 wechselwirkt die Probe mit der stationären Phase S und wird in ihre Komponenten, beispielweise wie dargestellt in die Komponenten A, B und C aufgetrennt. Die Komponenten A, B und C haben im ringförmigen Trennkanal unterschiedliche Umlaufgeschwindigkeiten und werden daher bei jedem Umlauf weiter getrennt. Eine Detektionseinrichtung 4, beispielsweise ein optisches Detektionssystem für Absorptions- oder Fluoreszenzmessungen, ist entlang des ringförmigen Trennkanals 1 angeordnet. Vorzugsweise ist sie, wie dargestellt, im Bereich der Mündung des Zuführkanals 2 angeordnet, da auf diese Weise eine Detektion einer durchlaufenden Komponente immer erst nach einem vollständigen Umlauf erfolgt. Es versteht sich, dass die Detektionseinrichtung 4 auch nicht dargestellte Auswerteeinrichtungen umfasst, in der die detektierten Signale weiter verarbeitet werden. Im dargestellten Prinzipbild befindet sich beispielsweise gerade die Komponente A im Detektionsfenster bzw. -volumen der Detektionseinrichtung 4.

Durch die ringförmige Ausbildung der Trennstrecke 1 kann die Gesamtlänge der Vorrichtung deutlich reduziert werden. Die Auftrennung einer injizierten Probe erfolgt während ihres periodischen Umlaufs in dem ringförmigen Trennkanal 1, in dem die stationäre Phase S angeordnet ist. Der Druckaufbau erfolgt in dem ringförmigen Trennkanal 1 selbst; auf externe Höchstdruckeinrichtungen kann verzichtet werden. Auf diese Weise kann beispielsweise eine Trennung bei 300 bar in einer 1 m langen Kapillare von 3 µm Durchmesser durch eine Vorrichtung mit mit einem ringförmigen Kanal gleichen Durchmessers und mit einem Umfang von 1 cm ersetzt werden, in dem die Probe 100 Umläufe vollzieht. Die auf diese Weise erzielbaren Trennleistungen liegen in der Grössenordnung von bis zu 400 000 theoretischen Trennstufen. Die erforderlichen Trennzeiten sind bei der erfindungsgemässen Trennvorrichtung deutlich kürzer als die bei den bekannten Trennvorrichtungen und liegen typischerweise bei etwa 30 Sekunden.

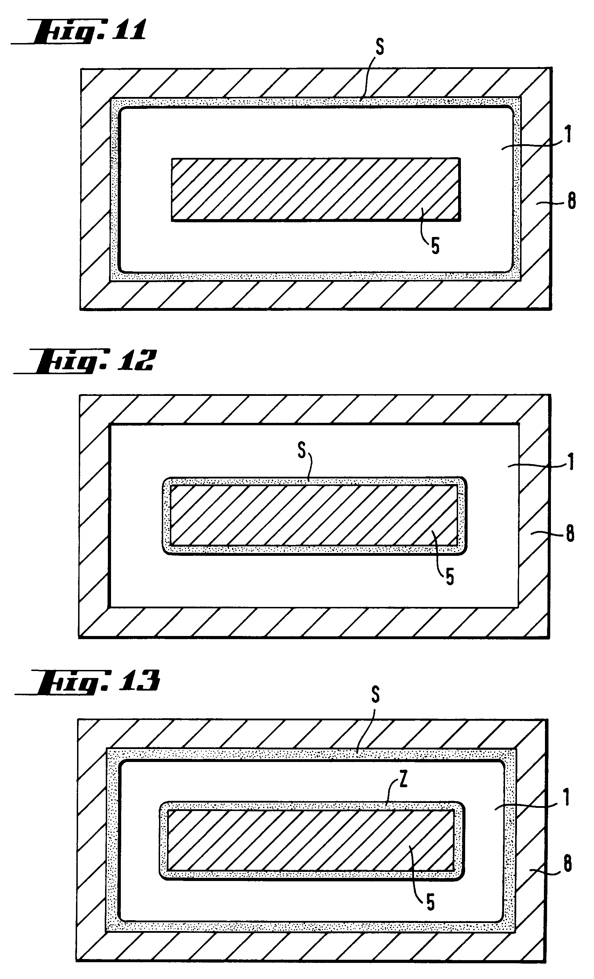

Eine ganz besonders bevorzugte Ausführungsvariante der Erfindung ist in Fig. 2 in aufgeschnittener Ansicht dargestellt. Bei dieser Variante sind die Transportmittel für die mobile Phase und die injizierte Probe innerhalb des ringförmigen Trennkanals 1 angeordnet. Im dargestellten Ausführungsbeispiel sind die Transportmittel durch einen torusförmigen, flach ringförmigen Rotor 5 gebildet, der innerhalb des ringförmigen Kanals 1 ungehindert rotierbar ist. Durch die Rotationsbewegung des Rotors 5 wird auf die umgebende mobile Phase mit der aufzutrennenden Probe übertragen. Auf diese Weise kann auf externe Pumpen für den zyklischen Umlauf der mobilen Phase mit der aufzutrennenden Probe in dem ringförmigen Trennkanal 1 verzichtet werden. Die Auftrennung findet quasi innerhalb der Pumpe statt.

In den Fig. 3-6 sind einige beispielsweise Rotorformen dargestellt. Die allgemeinste Form des Rotors 5 ist in Fig. 4 angegeben. Der Rotor 5 hat in diesem Fall grosse Ähnlichkeit mit einem O-Ring mit rechteckigem Querschnitt. Alternative Rotorformen sind in den Fig. 3, 5 und 6 dargestellt. Der Rotor 5 in Fig. 3 ist entlang seines inneren und äusseren Umfangs sägezahnartig hinterschnitten ausgebildet. Die Rotationsrichtung des derart geformten Rotors ist derart gewählt, dass jeweils die radial verlaufenden Flächen 51 als Flächen grössten Widerstandes die mobile Phase vorantreiben. Die in den Fig. 5 und 6 beispielsweise dargestellten Rotoren 5 haben die Form von Leitern mit unterschiedlich grossen Sprossenabständen. Der Querschnitt aller Rotoren 5 ist in der Regel rechteckig.

Den in Fig. 3, 5 und 6 dargestellten Rotoren 5 ist gemeinsam, dass ihre Form es erlaubt, dass sich die mobile Phase mit der Probe vertikal zum Umfang des Rotors 5 im ringförmigen Trennkanal 1 durchmischen kann. Auf diese Weise kann eine die Trennung möglicherweise verfälschende Schichtung der mobilen Phase in eine Schicht oberhalb des Rotors 5 und in eine unterhalb des Rotors 5 unterbunden werden.

In Fig. 7 ist eine Trennvorrichtung mit einer weiteren Variante des Rotors 5 innerhalb des ringförmigen Trennkanals 1 dargestellt. In diesem Fall ist der Rotor 5 in kleine Partikel aufgelöst, die durch Stossprozesse Impuls an die mobile Phase und die Probe übertragen und diese zu einem zyklischen Umlauf im ringförmigen Trennkanal 1 veranlassen. Der in Partikel aufgelöste Rotor 5 stellt für die Durchmischung der mobilen Phase innerhalb des ringförmigen Trennkanals 1 praktisch kaum ein Hindernis dar.

Der Rotor 5 ist aus Metall oder partiell metallisiert, ist vorzugsweise magnetisch und ist von vorzugsweise ausserhalb des ringförmigen Trennkanals 1 angeordneten Antriebsmitteln 6 induktiv antreibbar. Im Ausführungsbeispiel nach Fig. 7 sind diese Antriebsmittel 6 ein rotierbarer Permanentmagnet nach Art eines Magnetrührers. Die Rotation R' des Permanentmagneten 6 resultiert in einem korrespondierenden zyklischen Umlaufen des partikelförmigen Rotors 5. Die einzelnen Partikel übertragen Impuls an die mobile Phase mit der Probe und bewirken einen zyklischen Umlauf derselben innerhalb des ringförmigen Trennkanals gemäss Pfeil R. Die Umdrehungsgeschwindigkeit des Permanentmagneten 6 ist vorzugsweise den Erfordernissen gemäss einstellbar.

Bei dem in Fig. 8 dargestellten Ausführungsbeispiel der erfindungsgemässen Vorrichtung ist der Rotor 5 durch ein elektrisches Drehfeld antreibbar. Die Drehgeschwindigkeit des Drehfeldes ist den Erfordernissen gemäss einstellbar. Bei diesem Ausführungsbeispielist der ringförmige Kanal 1 mit Zufuhr- und Abfuhrkanälen 2 bzw. 3 in Planartechnik auf einem Plättchen aus Glas, Polymer oder einkristallinem Material erstellt. Die Zufuhr- und Abfuhrkanäle 2 bzw. 3 stehen mit Reservoirs für die mobile Phase M, die Probe P und deren Mischung W in Verbindung. Bei der Realisation der Vorrichtung in Planartechnik und unter Anwendung mikromechanischer und/oder mikroelektronischer Fertigungstechniken auf einem Plättchen aus Glas, Polymer oder einkristallinem Material können auch allfällige elektrische Kontakte 7 auf dem Chip integriert werden. Der Herstellungsprozess für den miniaturiserten Rotor 5 ist beispielsweise in "G. Fuhr, B. Wagner, Transducers '93 Digest of Technical Papers, ed. Institute of Electrical Engineers of Japan, Tokyo 1993 (ISBN 4-9900247-2-9), Seiten 88-92" beschrieben.

Fig. 9 zeigt einen Schnitt der Vorrichtung entlang der Verbindungslinie M-W in Fig.8. Die Vorrichtung umfasst ein Basisteil 10, in dem die grabenartigen Zufuhr- bzw. Abfuhrkanäle 2 und 3 und der ringförmige Trennkanal 1 mit dem darin enthaltenen Rotor 5 erstellt sind, und ein vorzugsweise transparentes Deckelteil 11 mit Anstecköffnungen 12 bzw. 13 für Zufluss- bzw. Abflusskapillaren für die Zufur- bzw. die Abfuhrkanäle 2 bzw. 3. Die Transparenz des Deckelteils 11 erlaubt es durch das Deckelteil 11 hindurch optische Messungen vorzunehmen, wie durch die Pfeile bei der Einrichtung 4 angedeutet ist. Die Messung findet dabei entlang des ringförmigen Trennkanals 1, vorzugsweise im Bereich der Einmündung des Zuführkanals 2 statt.

Der ringförmige Trennkanal 1 ist kapillarenartig ausgebildet. Die Dimensionen des Trennkanals entsprechen dabei einem Kapillarendurchmesser von etwa 0.1 µm bis etwa 100 µm, vorzugsweise etwa 2-5 µm. Der Umfang des ringförmigen Trennkanals beträgt von etwa 50 µm bis etwa 10 cm. Die Abmessungen der Zufuhr- bzw. Abfuhrkanäle 2 bzw. 3 entsprechen weitgehend denen des ringförmigen Trennkanals 1. Dies vereinfacht den Herstellungsprozess und verhindert unerwünschte Druckgradienten.

Die Darstellungen in Fig. 10a und 10b dienen zur Erläuterung des Geschwindigkeitsprofilsin der mobilen Phase zwischen dem umlaufenden Rotor 5 und der Begrenzungswand 8 des ringförmigen Kanals 1. An der ruhenden Begrenzungswand 8 hat die Geschwindigkeit der mobilen Phase ihr Minimum. In Richtung auf den umlaufenden Rotor 5 nimmt die Geschwindigkeit zu, bis sie ihr Maximum direkt am Rotor erreicht.

Ein besonderer Vorteil der Anordnung der Antriebsmittel 5 für die mobile Phase und die Probe innerhalb des ringförmigen Trennkanals 1 liegt auch darin, dass die stationäre Phase wahlweise an der Begrenzungswand 8 des Trennkanals 1 oder am Rotor 5 oder an beiden angeordnet sein kann. Dies ist in den Fig. 11 bis 13 dargestellt. Zudem erlaubt diese bevorzugte Ausbildung der Erfindung den Einsatz von zwei verschiedenen stationären Phasen S und Z. Eine der stationären Phasen, beispielsweise die Phase S, ist, wie in Fig.13 dargestellt, an der Begrenzungswand des ringförmigen Trennkanals 1 angeordnet während die zweite stationäre Phase Z am Rotor angeordnet ist. Auf diese Weise kann eine noch selektivere Trennung erfolgen, was die Trennleistung noch einmal erhöht. Beispielsweise ist die erste stationäre Phase S, die an der Begrenzungswand 8 des Trennkanals 1 angeordnet ist, sehr hydrophil. Die zweite stationäre Phase Z ist am Rotor 5 angeordnet und ist dagegen beispielsweise sehr lipophil. Die mobile Phase ist ein Medium mittlerer Lipophilie und Hydrophilie. Die lipophilen Komponenten der Probe bewegen sich im Trennkanal 1 mit den grössten Geschwindigkeiten. Die maximale Geschwindigkeit beträgt dabei bis zur doppelten Geschwindigkeit der umlaufenden mobilen Phase. Die hydrophilen Komponenten weisen dagegen die geringsten Umlaufgeschwindigkeiten auf. So kann eine ausgezeichnete selektive Trennung auch von sehr schnell umlaufenden Komponenten erreicht werden.

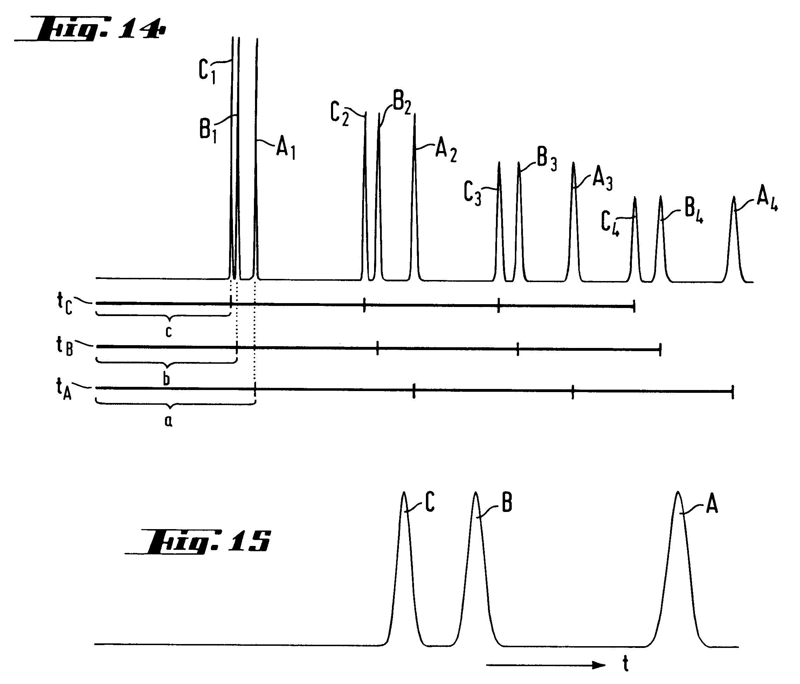

Aufgrund der unterschiedlichen Umlaufperioden der einzelnen Komponenten der aufgetrennten Probe kann es vorkommen, dass einzelne Komponenten einander überholen. In Fig. 14 ist die laufende Abstandsvergrösserung zwischen den einzelnen Komponenten für 4 Umläufe dargestellt. Die Peaks A,B,C mit den entsprechenden Indices stehen dabei für die bei jedem vollendeten Umlauf von der Detektionseinrichtung detektierten Signale. Unter den Peaks sind die Zeitskalen t_{A},t_{B},t_{C} für die Komponenten A, B und C angegeben. Die Umlaufperioden der einzelnen Komponenten sind mit a, b und c bezeichnet. Anhand dieser vereinfachten beispielsweisen Darstellung ist leicht einsichtig, dass die Komponente A nach einer gewissen Anzahl von Umläufen zuerst die Komponente C und dann die Komponent B überholen wird. Analog wird nach einer gewissen höheren Anzahl von Umläufen auch die Komponente B die Komponente C überholen. Diese Überholvorgänge wiederholen sich periodisch. Um daher das resultierende Signaldiagramm deuten zu können, müssen die Daten transformiert werden. Dies erfolgt durch Anwendung einer Orthogonaltransformation, insbesondere einer geeigneten Fouriertransformation, welche das zugehörige Frequenzspektrum liefert. Durch Anwendung dieser Transformation können die detektierten Peaks wieder zusammengefasst und in eindeutiger Weise zugeordnet werden. Das resultierende Diagramm hat die Form der üblicherweise erhaltenen Chromatogramme und kann in der üblichen Form weiter ausgewertet werden (Fig. 15).

Die erfindungsgemässe Vorrichtung und das erfindungsgemässe Verfahren beseitigen die Nachteile der bekannten chromatographischen Techniken. Die Leistungsfähigkeit der Kapillarchromatographie wird genutzt, ohne den Nachteil hoher Drücke und die Limitierungen durch die erhältlichen konventionellen Pumpensysteme in Kauf nehmen zu müssen. Die besondere Ausbildung der Vorrichtung mit einem innerhalb des ringförmigen Trennkanals angeordneten umlaufenden Rotor erlaubt die Erweiterung des chromatographoschen Prinzips dahingehend, dass nunmehr die Möglichkeit gegeben ist, auch zwei verschiedene stationäre Phasen für die Trennung einzusetzen, um die Selektivität der chromatographischen Trennung noch zu erhöhen. Die Vorrichtung ist einfach miniaturisierbar und unter Anwendung mikromechanischer und oder mikroelektronischer Fertigungstechniken herstellbar. Sie erlaubt sogar die Integration elektrischer und elektronischer Elemente direkt auf der in Planartechnik erstellten Vorrichtung.

## Patentansprüche

1. Vorrichtung zur Trennung fluider Substanzen, insbesondere kapillarchromatografische Trennvorrichtung, umfassend eine Trennnstrecke (1), in der eine stationäre Phase (S) angeordnet ist und die von einer mobilen Phase und einer injizierten Probe durchstömt wird, die in ihre Komponenten (A,B,C) aufzutrennen ist, und Mittel für den Transport der mobilen Phase sowie eine Detektionseinrichtung (4) zur Detektion der aufgetrennten Komponenten (A,B,C), dadurch gekennzeichnet, dass die Trennstrecke (1) als ringförmiger Kanal ausgebildet ist, in den Zufluss- und Abflusskanäle (2,3) für die mobile Phase und die aufzutrennende fluide Substanz münden.

2. Vorrichtung nach Anspruch 1, dadurch gekennzeichnet, dass die Mittel für den Transport der mobilen Phase samt der injizierten Probe innerhalb des ringförmigen Kanals (1) angeordnet sind.

3. Vorrichtung nach Anspruch 2, dadurch gekennzeichnet, dass die Mittel für den Transport der mobilen Phase und der Probe durch einen torusförmigen, flach ringförmigen oder in Partikel aufgelösten Rotor (5) gebildet sind, der innerhalb des ringförmigen Kanals (1) ungehindert rotierbar ist.

4. Vorrichtung nach Anspruch 3, dadurch gekennzeichnet, dass der rotierbare Rotor (5) derart ausgebildet ist, dass sich die mobile Phase samt der Probe weitgehend ungehindert in vertikaler Richtung des ringförmigen Kanals (1) durchmischen kann.

5. Vorrichtung nach Anspruch 4, dadurch gekennzeichnet, dass der Rotor (5) metallisch oder partiell metallisiert und vorzugsweise magnetisch ist und von vorzugsweise ausserhalb des ringförmigen Kanals (1) angeordneten Antriebsmitteln (6) induktiv antreibbar ist.

6. Vorrichtung nach Anspruch 5, dadurch gekennzeichnet, dass die Antriebsmittel (6) ein rotierender Permanentmagnet oder ein elektrisches oder magnetisches Drehfeld sind, deren Umdrehungsgeschwindigkeiten variabel einstellbar sind.

7. Vorrichtung nach einem der vorangehenden Ansprüche, dadurch gekennzeichnet, dass die Detektionseinrichtung (4) entlang des ringförmigen Kanals (1) angeordnet ist.

8. Vorrichtung nach einem der vorangehenden Ansprüche, dadurch gekennzeichnet, dass der ringförmige Kanal (1) kapillarenartig ausbebildet ist und einen Kapillarendurchmesser von etwa 0.1 µm bis etwa 100 µm aufweist.

9. Vorrichtung nach einem der vorangehenden Ansprüche, dass der ringförmige Kanal (1) mit Zufuhr- und Abfuhrkanälen (2,3) und die Mittel (5) für den Transport der mobilen Phase mit der injizierten Probe sowie gegebenenfalls der Detektor (4) und allfällige elektrische Kontakte in Planartechnik auf einem Plättchen aus Glas, Polymer oder einkristallinem Material angeordent sind, und dass gegebenenfalls eine Abdeckvorrichtung (11) für die grabenartigen Kanäle vorgesehen ist.

10. Vorrichtung nach einem der vorangehenden Ansprüche, dadurch gekennzeichnet, dass der Umfang des ringförmigen Kanals (1) von etwa 50 µm bis etwa 10 cm beträgt.

11. Vorrichtung nach einem der Ansprüche 2-10, dadurch gekennzeichnet, dass die stationäre Phase (S) an der Kanalinnenwand (8) und/oder an den Mitteln für den Transport der mobilen Phase samt der injizierten Probe angeordnet ist.

12. Vorrichtung nach einem der Ansprüche 2-10, dadurch gekennzeichnet, dass innerhalb des ringförmigen Kanals (1) zwei verschiedene stationäre Phasen (S,Z) angeordnet sind, wobei jeweils eine der beiden stationären Phasen an der Kanalinnenwand (8) und die andere stationäre Phase an den Mitteln (5) für den Transport der mobilen Phase und der Probe angeordnet ist.

13. Verfahren zur Trennung fluider Substanzen, insbesondere kapillarchromatographisches Trennverfahren, bei dem eine in ihre Komponenten (A,B,C) aufzutrennende Probe in eine mobile Phase injiziert und zusammen mit dieser durch eine Trennstrecke (1) transportiert wird, innerhalb der eine stationäre Phase (S) angeordnet ist, wobei die Probe durch Wechselwirkung mit der stationären Phase in ihre Komponenten (A,B,C) aufgetrennt wird, welche in Folge mit einer Detektionseinrichtung (4) detektiert werden können, dadurch gekennzeichnet, dass die mobile Phase zusammen mit der aufzutrennende Probe in einer als ringförmiger Kanal ausgebildeten Trennstrecke (1) zyklisch umgepumpt wird.

14. Verfahren nach Anspruch 13, dadurch gekennzeichnet, dass die mobile Phase und die aufzutrennende Probe mit Mitteln zyklisch umgepumpt werden, die innerhalb des ringförmigen Kanals angeordnet sind.

15. Verfahren nach Anspruch 14, dadurch gekennzeichnet, dass die mobile Phase und die Probe mit Hilfe eines torusförmigen, flach ringförmigen oder in Partikel aufgelösten Rotors, der innerhalb des ringförmigen Kanals ungehindert rotierbar ist, zyklisch umgepumpt werden.

16. Verfahren nach Anspruch 15, dadurch gekennzeichnet, dass die Auftrennung der Probe in ihre Komponenten durch das zwischen dem umlaufenden Rotor und der Kanalwand sich einstellende Geschwindigkeitsprofil der mobilen Phase unterstützt wird.

17. Verfahren nach Anspruch 16, dadurch gekennzeichnet, dass die Form des umlaufenden Rotors derart gewählt wird, dass eine Durchmischung der mobilen Phase in einer Richtung vertikal zur Umdrehungsrichtung des Rotors ermöglicht wird.

18. Verfahren nach Anspruch 17, dadurch gekennzeichnet, dass der Rotor induktiv von ausserhalb des ringförmigen Kanals angeordneten Antriebsmitteln angetrieben wird.

19. Verfahren nach Anspruch 18, dadurch gekennzeichnet, dass als Antriebsmittel für den Rotor ein rotierender Permanentmagnet oder ein Drehfeld eingesetzt werden, deren Drehgeschwindigkeit variabel einstellbar ist.

20. Verfahren nach einem der Ansprüche 13-19, dadurch gekennzeichnet, dass die die aufgetrennten Komponenten mit einer Detektionseinrichtung detektiert werden, die entlang des ringförmigen Kanals angeordnet ist.

21. Verfahren nach Anspruch 20, dadurch gekennzeichnet, dass die Gesamtheit der während eines Trennvorgangs bei jedem Umlauf detektierten Signale mit Hilfe einer Orthogonaltransformation zu einem Chromatogramm zusammengesetzt werden.

22. Verfahren nach einem der Ansprüche 13-21, dadurch gekennzeichnet, dass der ringförmige Kanal kapillarenartig ausbebildet wird, wobei ein Kapillarendurchmesser von etwa 0.1 µm bis etwa 100 µm gewählt wird.

23. Verfahren nach einem der Ansprüche 13-22, dass der ringförmige Kanal mit Zufuhr- und Abfuhrkanälen und die Mittel für den Transport der mobilen Phase sowie gegebenenfalls der Detektor und allfällige elektrische Kontakte in Planartechnik und unter Anwendung mikromechanischer und/oder mikroelektronischer Fertigungstechniken auf einem Plättchen aus Glas, Polymer oder einkristallinem Material erstellt wird, und dass gegebenenfalls eine Abdeckvorrichtung für die grabenartigen Kanäle vorgesehen wird.

24. Verfahren nach einem der Ansprüche 12-23, dadurch gekennzeichnet, dass der Umfang des ringförmigen Kanals zu etwa 50 µm bis etwa 10 cm gewählt wird.

25. Verfahren nach einem der Ansprüche 13-24, dadurch gekennzeichnet, dass die stationäre Phase an der Kanalinnenwand und/oder an den Mitteln für den Transport der mobilen Phase angeordnet wird.

26. Verfahren nach einem der Ansprüche 13-24, dadurch gekennzeichnet, dass innerhalb des ringförmigen Kanals zwei verschiedene stationäre Phasen angeordnet werden, wobei jeweils eine der beiden stationären Phasen an der Kanalinnenwand und die andere stationäre Phase an den Mitteln für den Transport der mobilen Phase angeordnet wird.
